# EUROPÄISCHE PATENTSCHRIFT

(11) **EP 3 766 842 B1**
(45) Veröffentlichungstag und Bekanntmachung des Hinweises auf die Patenterteilung: **12.02.2025**
(21) Anmeldenummer: 19186735.7
(22) Anmeldetag: 17.07.2019
(51) Int. Cl.: C03B 37/012

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET D'UNE PRÉFORME DE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); SATTMANN, Ralph, 63450 Hanau (DE)
(74) Vertreter: Gille Hrabal Partnerschaftsgesellschaft mbB Patentanwälte

(56) Entgegenhaltungen:
- EP-A1- 3 136 143
- WO-A2-02/072489
- GB-A- 2 566 466
- US-A1- 2004 096 173
- "University of Bath PhD.", 31 December 2013, article FEI YU: "Hollow core negative curvature fibres", pages: 59 - 74, XP055656461

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen,
(c) Anordnen der Antiresonanzelement-Vorformlinge an Soll-Positionen der Innenseite der Hüllrohr-Wandung unter Bildung einer primären Vorform für die Hohlkernfaser, die einen hohlen Kernbereich und einen Mantelbereich aufweist, und
(d) Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen,
(c) Anordnen der Antiresonanzelement-Vorformlinge an Soll-Positionen der Innenseite der Hüllrohr-Wandung unter Bildung einer primären Vorform für die Hohlkernfaser, die einen hohlen Kernbereich und einen Mantelbereich aufweist, und
(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur

Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

Aus der GB 2 566 466 A ist ein Verfahren zur Herstellung einer Vorform für eine antiresonante optische Hohlkernfaser mit den eingangs genannten Verfahrensschritten (a) bis (d) bekannt. Das Anordnen der ARE-Außenrohre (antiresonant cladding tubes) an vordefinierten peripheren Stellen innerhalb des Hüllrohres umfasst den Einsatz von Abstandselementen, die jeweils mit zwei benachbarten ARE-Außenrohren in Kontakt sind. Der radiale Abstand r₂ zwischen diesen Kontaktpunkten und der Hüllrohr-Längsachse ist größer als der radiale Abstand r₁ zwischen den Längsachsen des ARE-Außenrohres und der Hüllrohr-Längsachse. Die Abstandselemente können eine integrale Struktur mit dem Hüllrohr bilden. Das Hüllrohr kann dabei so geformt werden, dass es radial vorstehende Teile enthält, beispielsweise durch Formen oder durch mechanische Bearbeitung der Innenwand. Dazu wird Glasmaterial entfernt, um konkave Bereiche zu schaffen, aus denen die Abstandselemente als konvexe Vorsprünge herausragen. Bei einem Beispiel haben die Abstandselemente einen rechteckigen Querschnitt, der aus der konkaven Innenwand des Hüllrohres herausragt. Bei einem anderen Beispiel ist die Innenwand mit einer Reihe von abwechselnden konkaven Bereichen zur Aufnahme der ARE-Außenrohre und konvexen Vorsprüngen geformt, die als Abstandshalter dienen.

Die WO 2002/072489 A2 beschreibt ein Verfahren zur Herstellung einer mikrostrukturierten optischen Faser, bei der ein Glasrohr mit Längsrillen oder -schlitzen zur Ausbildung von Hohlkanälen eingesetzt wird. Die Längsrillen oder -schlitze können durch mechanische Bearbeitung erzeugt werden.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzelement-Außenrohr (kurz: ARE-Außenrohr) und einseitig an der Innenmantelfläche des ARE-Außenrohres eingeschweißtem Antiresonanzelement-Innenrohr (kurz: ARE-Innenrohr), an der Innenseite eines Hüllrohres angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass das Bereitstellen des Hüllrohres gemäß Verfahrensschritt (a) eine Bearbeitungs-Maßnahme umfasst, bei der die Hüllrohr-Wandung durch spanende Bearbeitung im Bereich der Soll-Positionen mit einer sich in Richtung der Hüllrohr-Längsachse erstreckenden Längsstruktur versehen wird, die um den Umfang der Hüllrohr-Wandung verteilte Längsschlitze aufweist und dass die Antiresonanzelement-Vorformlinge an jeweils einem Längsschlitz angeordnet sind.

Ausgangspunkt für die Herstellung der Antiresonanten Hohlkernfaser ist eine Vorform, die hier auch als "Cane" oder als "primäre Vorform" bezeichnet wird. Sie umfasst ein Hüllrohr, in dem oder an dem Vorstufen oder Vorformlinge für die Ausformung Antiresonananter Elemente in den Hohlkernfasern (hier kurz als "Antiresonanzelemente" bezeichnet) enthalten sind. Die primäre Vorform kann zu der Hohlkernfaser elongiert werden, in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Die Genauigkeit der Positionierung der Vorformlinge wird verbessert, indem das Hüllrohr vorab durch spanende mechanische Bearbeitung strukturiert wird.

Unter spanender Bearbeitung werden abtragende mechanische Bearbeitungstechniken wie etwa Drehen, Scheiden, Bohren, Sägen, Fräsen oder Schleifen verstanden. Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen. Vorzugsweise wird die Längsstruktur der Hüllrohr-Innenwandung durch Bohren, Sägen, Fräsen, Schneiden oder Schleifen erzeugt.

Durch diese Bearbeitung wird eine sich in Richtung der Hüllrohr-Längsachse erstreckende Längsstruktur geschaffen, die als Positionierungshilfe für die Antiresonanzelement-Vorformlinge dient. Sie erleichtert, dass die Antiresonanzelement-Vorformlinge vorgegebene definierte Positionen an der Innenseite des Hüllrohres einnehmen. Dazu ist die Längsstruktur mindestens von der Hüllrohr-Innenseite her zugänglich; sie kann sich auch bis zur Außenseite durch die gesamte Hüllrohr-Wandung erstrecken.

Die Längsstruktur weist um den Umfang der Hüllrohr-Wandung verteilte Längsschlitze auf, wobei die Antiresonanzelement-Vorformlinge an einem Längsschlitz angeordnet sind.

Die Längsschlitze durchdringen die Hüllrohrwandung von innen nach außen, mit Ausnahme der beiden stirnseitigen Endbereiche des Hüllrohres. Sie haben parallele Längskanten und sie weisen eine maximale Schlitzbreite S_{B} auf, wobei die Antiresonanzelement-Vorformlinge vorzugsweise mit den Längskanten verbunden werden.

Die Antiresonanzelement-Vorformlinge haben dabei eine Breitenabmessung, die größer ist als die maximale Breite S_{B}, so dass sie nicht vollständig in die Längsschlitze eintauchen.

Mit der Erfindung können Antiresonante Hohlkernfasern sowie Vorformen dafür präzise und reproduzierbar hergestellt werden.

Vorzugsweise wird ein Hüllrohr mit kreisrundem Innenquerschnitt bereitgestellt.

Dadurch, dass zum Zweck der Strukturierung der Hüllrohr-Innenseite ein Hüllrohr mit rundem Innenquerschnitt bereitgestellt wird, ergibt sich ein geringer Fertigungsaufwand für das Hüllrohr selbst, beispielsweise im Vergleich zu einem Hüllrohr mit einer Innenbohrung in Form eines Innensechskants.

Die Positionierungsstellen können unterschiedliche Formen aufweisen. Längsstrukturen, die als in radialer Richtung durchgehende Längsschlitze ausgeführt sind, lassen sich einfach und genau fertigen; beispielsweise durch Fräsen, Bohren oder Einschneiden. Die Innengeometrie des Schlitzes ist beispielsweise halbrund, halboval, v-förmig, u-förmig oder polygonal. Sie kann auch eine Vertiefung oder Ausnehmung bilden, die sich von innen nach außen verengt.

Insbesondere im Fall durchgehender Längsschlitze ist es vorteilhaft, wenn das Hüllrohr stirnseitige Enden aufweist, wobei die Längsstruktur vor den stirnseitigen Enden endet.

Je nach Geometrie der Längsstruktur und Form und Größe der Antiresonanzelement-Vorformlinge ergeben sich bei der Fixierung zwischen Antiresonanzelement-Vorformling und Längsstruktur ein Kontaktpunkt, mehrere Kontaktpunkte oder grö-ßere Kontaktflächen. Besonders bewährt hat sich eine Verfahrensweise, bei der die Antiresonanzelement-Vorformlinge bei Anordnung an der Soll-Position gemäß Verfahrensschritt (c) die Längsstruktur jeweils an zwei Kanten berühren

Dies ergibt eine stabilere Lage als bei nur einer Berührungslinie und ein "Wegrollen" des Antiresonanzelement-Vorformlings während des Elongierens lässt ich sicher unterbinden. Die Außenabmessung (beispielsweise der Außendurchmesser) des Vorformlings kann dabei größer sein als die maximale Breite S_{B} der Längsstruktur, so dass der Vorformling auf dem Längsschlitz aufliegt und nicht darin vollständig eintaucht. Unterhalb der Auflagekanten ergibt sich gegebenenfalls im Längsschlitz ein Hohlraum, in den ein Gas eingeleitet oder aus dem ein Gas abgesaugt werden kann.

Es hat sich eine Verfahrensvariante bewährt, bei der die Antiresonanzelement-Vorformlinge jeweils mindestens ein Antiresonanzelement und mindestens eine mit dem Antiresonanzelement verbundene Kapillare aufweisen, wobei die Kapillare in einer Ausnehmung der Längsstruktur aufgenommen wird, und beim Elongieren der Vorform und/oder des Halbzeugs durch Anlegen eines Innendrucks in der Kapillar-Innenbohrung verformt wird.

Die Kapillare dient hierbei sowohl zur Fixierung des Antiresonanzelement-Vorformlings an der Längsstruktur, die zu diesem Zweck über eine Ausnehmung mit Abmessungen verfügt, die zur Aufnahme der Kapillare ausreichen, sondern die Kapillare wird beim Elongierprozess zusätzlich mit Druck beaufschlagt, so dass sie infolge ihrer Umformung und Ausdehnung das eigentliche Antiresonanzelement des Vorformlings positioniert. Die Wandung der umgeformten Kapillare kann dabei ein zusätzliches Antiresonanzelement des Vorformlings bilden.

Zur Gewährleistung einer präziseren geometrischen Struktur geht die Herstellung des Verbundes zwischen Antiresonanzelement-Vorformling mit den jeweiligen Längskanten durch Erweichen und gleichzeitig mit einer Längung des Verbundes einher. Dafür wird das Ensemble aus Hüllrohr und Antiresonanzelement-Vorformlingendas hier um im Folgenden auch als "Cane" bezeichnet wird, elongiert. Dabei werden die Antiresonanzelement-Vorformlinge über ihre gesamte Länge mit den Schnittkanten im Inneren des Hüllrohres verbunden.

Der Bereich unterhalb der Längskanten bildet einen Hohlraum, in den ein Gas eingeleitet oder aus dem ein Gas abgesaugt werden kann.

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelement-Vorformlinge um den Hohlkern mit einer ungeradzahligen Symmetrie angeordnet sind.

Bei einer bevorzugten Verfahrensvariante umfasst das Anordnen der Antiresonanzelement-Vorformlinge und/oder das Elongieren der primären Vorform, und/oder das Ziehen der Hohlkernfaser eine Fixierungs-Maßnahme und/oder eine Versiegelungsmaßnahme unter Einsatz einer amorphe SiO₂-Partikel enthaltenden Versiegelungs- oder Verbindungsmasse.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Die Versiegelungs- und Verbindungsmasse ist auch vorteilhaft einsetzbar, um beim Elongieren der primären Vorform und/oder beim Ziehen der Hohlkernfaser offene Enden der Antiresonanzelement-Vorformlinge und/oder einzelne Strukturelemente der Antiresonanzelement-Vorformlinge und/oder ein etwaigen Ringspalt zwischen Rohrelementen zu verschleißen.

Auf diese Weise können die einzelnen Bestandteile der primären Vorform und/oder sekundären Vorform beim Elongieren beziehungsweise beim Faserziehprozess unterschiedlichen Innendrücken ausgesetzt werden.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass das Bereitstellen des Hüllrohres gemäß Verfahrensschritt (a) eine Bearbeitungs-Maßnahme umfasst, bei der die Hüllrohr-Wandung durch spanende Bearbeitung im Bereich der Soll-Position mit einer sich in Richtung der Hüllrohr-Längsachse erstreckenden Längsstruktur versehen wird, die um den Umfang der Hüllrohr-Wandung verteilte Längsschlitze aufweist und dass die Antiresonanzelement-Vorformlinge an jeweils einem Längsschlitz angeordnet sind.

Die Vorform ist Ausgangspunkt für die Herstellung der Antiresonanten Hohlkernfaser. Durch Elongieren der primären Vorform wird entweder direkt die Antiresonante Hohlkernfaser gezogen oder es wird zunächst durch Weiterverarbeitung der primären Vorform ein anderes Halbzeug erzeugt, das hier auch als "sekundäre Vorform" bezeichnet wird, und aus der die Antiresonante Hohlkernfaser gezogen werden kann.

In jedem Fall umfasst die Herstellung der Vorform den Einbau und das Verbinden von Antiresonanzelement-Vorformlingen mit einem Hüllrohr. Die Genauigkeit der Positionierung der Vorformlinge wird verbessert, indem das Hüllrohr vorab strukturiert wird. Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenseite zugänglich; sie kann sich auch bis zur Außenseite durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Im Einzelnen zeigt in schematischer Darstellung
- **Figuren 1 bis 3**: Hüllrohre zum Einsatz in einem Verfahren zur Herstellung einer Vorform für eine Hohlkernfaser mit Längsstrukturen zur Positionierung von Antiresonanzelement-Vorformlingen in mehreren Ausführungsformen, die sämtlich nicht zur Erfindung gehörende Referenzbeispiele sind,
- **Figuren 4 und 5**: Hüllrohre mit Längsstrukturen und darin positionierten Antiresonanzelement-Vorformlingen anhand von Kontaktpunkten und Kontaktflächen, die sämtlich nicht zur Erfindung gehörende Referenzbeispiele sind,
- **Figuren 6 und 7**: weitere Ausführungsformen von Hüllrohren mit Längsstrukturen und darin positionierten Antiresonanzelement-Vorformlingen, die sämtlich nicht zur Erfindung gehörende Referenzbeispiele sind,
- **Figuren 8 und 9**: eine Ausführungsform eines Hüllrohrs mit Längsstrukturen und darin positionierten Antiresonanzelement-Vorformlingen, die mit einer Kapillare zum Zweck einer einstellbaren Positionierung ausgestattet sind, das ein nicht zur Erfindung gehörendes Referenzbeispiel ist,
- **Figur 10**: Verfahrensschritte zur Herstellung einer Vorform für eine Hohlkernfasern unter Einsatz eines geschlitzten Hüllrohres,
- **Figur 11**: einen Ausschnitt von Längsstruktur und Antiresonanzelement aus Figur 10c in vergrößerter Darstellung, und
- **Figur 12**: einen Figur 11 entsprechenden Ausschnitt mit einer anderen Ausführungsform des Antiresonanzelements.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

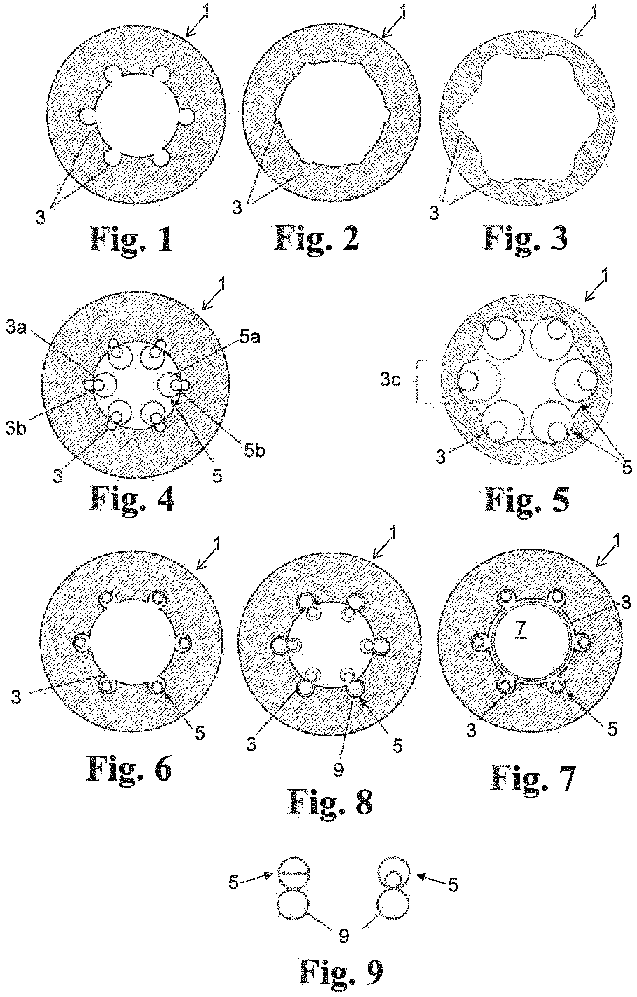

Die Figuren 1 bis 8 zeigen jeweils schematisch eine Draufsicht auf die Hüllrohr-Stirnseite. Die Hüllrohre 1 haben an der Innenseite der Hüllrohr-Wandung 1a jeweils Längsrillen 3. Die Längsrillen 3 sind in sechszähliger Symmetrie gleichmäßig um den Innenumfang des jeweiligen Hüllrohres 1 verteilt.

Die Hüllrohre 1 bestehen aus Quarzglas. Sie haben eine Länge von 500 mm, einen Außendurchmesser von 73 mm und einen Innendurchmesser von 24 mm.

**Figur 1** zeigt tiefe, enge und im Querschnitt nahezu geschlossen kreisförmige Längsrillen 3, die durch Bohren erzeugt sind. Die maximale Tiefe beträgt 3 mm und der Innendurchmesser beträgt 4 mm.

**Figur 2** zeigt flache, enge und im Querschnitt halbkreisförmige Längsrillen 3, die durch Fräsen erzeugt sind.

**Figur 3** zeigt flache, breite im Querschnitt schalenförmige Längsrillen 3, die ebenfalls durch Fräsen erzeugt sind.

Die Längsrillen 3 dienen als Positionierhilfen für Antiresonanzelement-Vorformlinge 5. Diese können als Ensemble miteinander verschachtelter Elemente aus einem ARE-Außenrohr 5a und einer ARE-Innenrohr 5b vorliegen, wie in den Figuren 4 und 5 dargestellt.

**Figur 4** zeigt tiefe, enge und im Querschnitt nahezu geschlossene, kreisförmige Längsrillen 3, die durch Bohren erzeugt sind und an denen die Antiresonanzelement-Vorformlinge 5 jeweils an zwei Kanten 3a, 3b anliegen. Das ARE-Außenrohr hat jeweils eine Außendurchmesser von 73 mm. Die Wandstärke von ARE-Innenrohr und ARE-Außenrohr sind etwa gleich und liegen bei 0,35 mm.

**Figur 5** zeigt flache, breite und im Querschnitt schalenförmige Längsrillen 3, die durch Fräsen erzeugt sind und an denen die Antiresonanzelement-Vorformlinge 5 jeweils an größeren Kontaktflächen 3c anliegen. Das ARE-Außenrohr hat jeweils einen Außendurchmesser von 73 mm. Die Wandstärke von ARE-Innenrohr und ARE-Außenrohr sind etwa gleich und liegen bei 0,35 mm.

**Figur 6** zeigt tiefe, enge und im Querschnitt nahezu geschlossene, kreisförmige Längsrillen 3, die durch Bohren erzeugt sind und in denen die Antiresonanzelement-Vorformlinge 5 aufgenommen sind. Die Antiresonanzelement-Vorformlinge 5 sind in dem Fall als einfache Kapillarrohre ausgebildet.

**Figur 7** zeigt tiefe, enge und im Querschnitt nahezu geschlossen kreisförmige Längsrillen 3, die durch Bohren erzeugt sind und in denen die Antiresonanzelement-Vorformlinge 5 aufgenommen sind. Die Antiresonanzelement-Vorformlinge 5 sind in dem Fall als einfache Kapillarrohre ausgebildet. In die Hüllrohr-Innenbohrung ist koaxial zur Hüllrohr-Längsachse ein Einsatzrohr 8 eingesetzt.

Der Außendurchmesser des Einsatzrohres 8 ist ähnlich dem Innendurchmesser des Hüllrohres 1 (wie Fig. 1) und dessen Wanddicke ist ähnlich der der Antiresonanzelement-Vorformlinge. Vor dem Faserziehprozess wird das Hüllrohr 1 auf das Einsatzrohr 8 aufkollabiert, so dass die Längsrillen 3 geschlossen werden. Die geschlossenen Längsrillen bilden Hohlkanäle, die anschließend (beispielsweise beim Elongieren der Vorform) aufgeblasen werden. Dadurch bilden sich am Einsatzrohr 8 nach innen in Richtung auf die Innenbohrung gerichtete Ausstülpungen mit konvexen Oberflächen, die als zusätzliche antiresonante Grenzschicht wirken.

Bei einer (in den Figuren nicht gezeigten Verfahrensvariante) werden im Querschnitt nahezu geschlossen kreisförmige Längsrillen durch Bohren erzeugt. In die Hüllrohr-Innenbohrung ist koaxial zur Hüllrohr-Längsachse ein Einsatzrohr eingesetzt. Der Außendurchmesser des Einsatzrohres 8 ist ähnlich dem Innendurchmesser des Hüllrohres (wie Fig. 1) und dessen Wanddicke ist ähnlich der der Antiresonanzelement-Vorformlinge. Vor dem Faserziehprozess wird das Hüllrohr auf das Einsatzrohr aufkollabiert, so dass die Längsrillen abgeschlossen werden. Die abgeschlossenen Längsrillen bilden Hohlkanäle, die anschließend (beispielsweise beim Elongieren der Vorform) aufgeblasen werden. Dadurch bilden sich am Einsatzrohr nach innen in Richtung auf die Innenbohrung gerichtete Ausstülpungen mit konvexen Oberflächen, die als Antiresonanzelemente wirken.

Bei der in **Figur 8** gezeigten Verfahrensvariante sind die Antiresonanzelement-Vorformlinge 5 mit Antiresonanzelementen und zusätzlich mit einer Positionierkapillare 9 ausgestattet. Die Positionierkapillaren 9 sind jeweils in die im Querschnitt nahezu geschlossen kreisförmigen, durch Bohren erzeugten Längsrillen 3 eingesetzt. Die Positionierkapillaren 9 bilden Hohlkanäle, die beim Erweichen des Ensembles, beispielsweise beim Elongieren der Vorform aufgeblasen werden können, so dass die daran fixierten Antiresonanzelemente näher an die Mitte (den Kernbereich) herangeschoben werden können. Das Maß der Verschiebung kann dabei einfach über den Innendruck in den Hohlkanälen (Positionierkapillaren 9) eingestellt und geregelt werden. Dadurch lässt sich neben einer genauen Einstellung der azimutalen Position auch die radiale Position der Antiresonanzelemente und somit der Kerndurchmesser der Antiresonanten Hohlkernfasern einstellen.

**Figur 9** zeigt zwei verschiedene Ausführungsformen von Antiresonanzelement-Vorformlingen 5, die jeweils mit einer Positionierkapillare 9 ausgestattet sind.

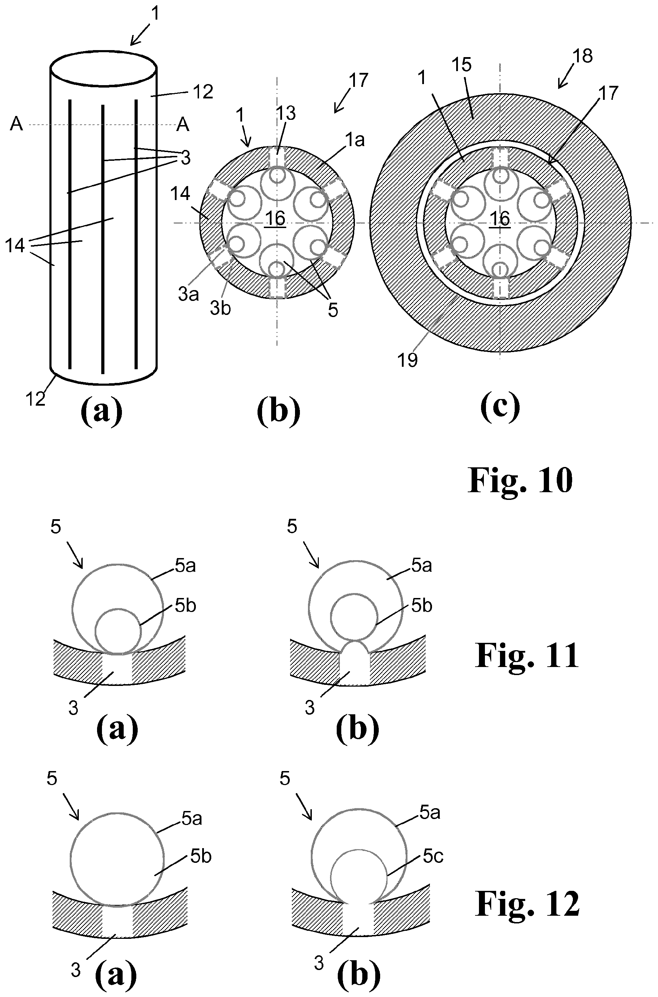

Die Figuren 10 bis 12 zeigen schematisch Verfahrensschritte zur Herstellung von Hohlkernfasern, wobei zur präzisen Positionierung der Antiresonanzelement-Vorformlinge ein Quarzglas-Hüllrohr 1 mit Längsschlitzen 3 eingesetzt wird. Wie in **Figur 10(a)** gezeigt, wird die Wandung des Hüllrohrs 1 an zuvor definierten azimutalen Positionen im gleichmäßigen Abstand längsseitig eingeschnitten, beispielsweise mittels mechanischer Säge, Wasserstrahlschneiden, Laser oder dergleichen. Die Anzahl der Längsschnitte 3 entspricht der Anzahl der zu positionierenden Antiresonanzelement-Vorformlinge 5, im Ausführungsbeispiel sind es sechs Vorformlinge 5. Die Längsschnitte 3 enden vor den Hüllrohrenden, so dass die stirnseitigen Endbereiche 12 weiterhin umlaufend geschlossen bleiben und die verbleibenden Stege 14 verbinden. Anschließend werden die Schnittkanten verglast.

Die Schnittbreite der Längsschlitze 3 ist einheitlich und beträgt 2 mm. Die Antiresonanzelement-Vorformlinge 5 haben einen im Wesentlichen runden Außenquerschnitt mit einem Durchmesser von 7,4 mm.

Aus der Draufsicht auf den Querschnitt des Zwischenrohres 10 entlang der Schnittlinie A-A in **Figur 10(b)** ist erkennbar, dass die sechs Längsschlitze 3 um die Rohrwandung 1a gleichmäßig verteilt sind, und sie zeigt die Antiresonanzelement-Vorformlinge 5, die an den Längsschlitzen 3 an jeweils zwei Kontaktlinien, den Schnittkanten 3a; 3b anliegen und in die Hüllrohr-Innenbohrung 16 hineinragen. Zur Fixierung werden die beiden Enden der Antiresonanzelement-Vorformlinge 5 beispielsweise an der Innenseite des Hüllrohres 1 angeklebt oder mit diesem verschmolzen. Alternativ und bevorzugt werden die Antiresonanzelement-Vorformlinge mittels der oben beschriebenen SiO₂-haltigen Versiegelungs- und Verbindungsmasse mit der Hüllrohr-Innenmantelfläche verbunden. Dafür genügt eine lokale Fixierung, insbesondere in den beiden stirnseitigen Endbereichen.

Durch eine anschließende Längung dieses Ensembles werden die Antiresonanzelement-Vorformlinge 5 über ihre gesamte Länge mit den Schnittkanten 3a; 3b im Inneren des Hüllrohres 1 verbunden. Durch das Anlegen von Überdruck in der Innenbohrung des Hüllrohres 1 kann überprüft werden, ob die Schnittfugen 3 vollständig von den Antiresonanzelement-Vorformlingen 5 verschlossen sind. Die Längsschlitze 3 dienen somit als exakte Positionierungshilfe, an der jeder Antiresonanzelement-Vorformling 5 genau positioniert und fixiert werden kann. Das Ensemble 17 aus Mantelrohr 1 und darin positionierten Antiresonanzelement-Vorformlingen 5, wird häufig auch als "Cane" (17) bezeichnet.

In **Figur 10(c)** ist dargestellt, dass der Cane 17 anschließend mit einem Überfangrohr 15 überfangen wird, um zusätzliches Mantelmaterial hinzuzufügen und um das für die Hohlkernfaser vorgegebene Kern-Mantel-Durchmesserverhältnis in der Vorform 18 einzustellen. In der so erhaltenen Vorform 18 verbleibt zwischen dem Überfangrohr 15 und dem Cane 17 ein Ringspalt 19.

Beim Elongieren der Vorform 18 zur Hohlkernfaser kann über den Ringspalt 19 in die Hohlkanäle, die sich in den Schnittfugen 3 zwischen dem Überfangrohr 15 und den angeschmolzenen Antiresonanzelement-Vorformlingen 5 gebildet haben, Gas eingeleitet oder daraus abgezogen werden, um in den Hohlkanälen Überdruck oder Unterdruck zu erzeugen.

Sofern erforderlich oder gewünscht, kann damit die radiale Position der Antiresonanzelemente 5 in der Hüllrohr-Innenbohrung 16 verändert und korrigieret werden, wie in **Figur 11** skizziert. Dabei zeigt Skizze (a) einen Antiresonanzelement-Vorformling 5 mit ARE-Außenrohr 5a und verschachteltem Innenelement (ARE-Innenrohr 5b) in der Ausgangsposition. Skizze (b) zeigt die durch Druck und Hitze verformte und bereichsweise nach innen eingestülpte ARE-Außenrohrwandung mit dem auf der Einstülpung fixierten ARE-Innenrohr 5b in einer gegenüber der Ausgangsposition veränderten radialen Position. So können auch Faserdesigns realisiert werden, die abweichend vom klassischen "Stack-and-Draw-Technik" auch nicht-hexagonale Symmetrie und insbesondere nicht ganzzahlige Symmetrie haben.

Durch Anlegen von Druck in den Hohlkanälen ist es auch möglich, einen Wandungsabschnitt eines Antiresonanzelement-Vorformlings 5 zum Inneren des Antiresonanzelement-Vorformlings "umzuklappen". **Figur 12(a)** zeigt einen Antiresonanzelement-Vorformling 5 mit einfachem ARE-Außenrohr 5a (ohne zusätzliches verschachteltes ARE-Innenrohr) in Ausgangsposition. Unter Einwirkung von Hitze und Druck wird der Wandungsabschnitt zwischen den beiden Kontaktlinien nach Innen aufgeblasen. Wie in **Figur 12b** gezeigt, entsteht so innerhalb des ARE-Außenrohrs 5a eine weitere Glasmembran 5c mit negativ (konvex) gekrümmter Oberfläche, die ein verschachteltes Innenelement wie das ARE-Innenrohr 5b ("nested element") ersetzen kann.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen eines Hüllrohres (1), das eine Hüllrohr-Innenbohrung (16) und eine Hüllrohr-Längsachse aufweist, entlang der sich eine von einer Innenseite und einer Außenseite begrenzte Hüllrohr-Wandung (1a) erstreckt,
(b) Bereitstellen einer Anzahl von Antiresonanzelement-Vorformlingen (5),
(c) Anordnen der Antiresonanzelement-Vorformlinge (5) an Soll-Positionen der Innenseite der Hüllrohr-Wandung (1a) unter Bildung einer primären Vorform für (17) die Hohlkernfaser, die einen hohlen Kernbereich und einen Mantelbereich aufweist, und
(d) Weiterverarbeitung der primären Vorform (17) zu einer sekundären Vorform (18), aus der die Hohlkernfaser gezogen wird, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** das Bereitstellen des Hüllrohres (1) gemäß Verfahrensschritt (a) eine Bearbeitungs-Maßnahme umfasst, bei der die Hüllrohr-Wandung (1a) durch spanende Bearbeitung im Bereich der Soll-Positionen mit einer sich in Richtung der Hüllrohr-Längsachse erstreckenden Längsstruktur (3) versehen wird, die um den Umfang der Hüllrohr-Wandung (1a) verteilte Längsschlitze aufweist und dass die Antiresonanzelement-Vorformlinge (5) an jeweils einem Längsschlitz angeordnet sind.

2. Verfahren nach Anspruch 1, **dadurch gekennzeichnet, dass** die Längsstruktur (3) der Hüllrohr-Innenwandung (1a) durch Bohren, Sägen, Fräsen, Schneiden oder Schleifen erzeugt wird.

3. Verfahren nach Anspruch 1 oder 2, **dadurch gekennzeichnet, dass** ein Hüllrohr (1) mit kreisrundem Innenquerschnitt bereitgestellt wird.

4. Verfahren nach einem der vorhergehenden Ansprüche, **dadurch gekennzeichnet, dass** das Hüllrohr (1) stirnseitige Enden (12) aufweist, und dass die Längsstruktur (3) vor den stirnseitigen Enden endet.

5. Verfahren nach einem der vorhergehenden Ansprüche, **dadurch gekennzeichnet, dass** die Antiresonanzelement-Vorformlinge (5) bei Anordnung an der Soll-Position gemäß Verfahrensschritt (c) die Längsstruktur (3) jeweils an zwei Kanten (3a; 3b) berühren.

6. Verfahren nach Anspruch 1, **dadurch gekennzeichnet, dass** die Längsschlitze parallele Längskanten (3a; 3b) und eine maximale Schlitzbreite S_{B} aufweisen und die Antiresonanzelement-Vorformlinge () mit den Längskanten (3a; 3b) verbunden werden.

7. Verfahren nach Anspruch 6, **dadurch gekennzeichnet, dass** die Antiresonanzelement-Vorformlinge (5) mit den Längskanten (3a; 3b) durch Erweichen, vorzugsweise begleitet von einer gleichzeitigen Längung, verbunden werden.

8. Verfahren nach einem der vorhergehenden Ansprüche, **dadurch gekennzeichnet, dass** die Antiresonanzelement-Vorformlinge (5) jeweils mindestens ein Antiresonanzelement (5a; 5b) und mindestens eine mit dem Antiresonanzelement (5a; 5b) verbundene Kapillare (9) aufweisen, wobei die Kapillare (9) in einer Ausnehmung der Längsstruktur (3) aufgenommen wird, und bei Durchführung eines Prozesses gemäß Verfahrensschritt (d) die Kapillare (9) durch Anlegen eines Innendrucks in der Kapillar-Innenbohrung verformt wird.

9. Verfahren nach einem der vorhergehenden Ansprüche, **dadurch gekennzeichnet, dass** die Antiresonanzelemente (5) um den Hohlkern mit einer ungeradzahligen Symmetrie angeordnet sind.

10. Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres (1), das eine Hüllrohr-Innenbohrung und eine Hüllrohr-Längsachse aufweist, entlang der sich eine von einer Innenseite und einer Außenseite begrenzte Hüllrohr-Wandung (1a) erstreckt,
(b) Bereitstellen einer Anzahl von Antiresonanzelement-Vorformlingen (5),
(c) Anordnen der Antiresonanzelement-Vorformlinge (5) an Soll-Positionen der Innenseite der Hüllrohr-Wandung (1a) unter Bildung einer primären Vorform (17) für die Hohlkernfaser, die einen hohlen Kernbereich und einen Mantelbereich aufweist, und
(d) optionale Weiterverarbeitung der primären Vorform (17) zu einer sekundären Vorform (18) für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** das Bereitstellen des Hüllrohres (1) gemäß Verfahrensschritt (a) eine Bearbeitungs-Maßnahme umfasst, bei der die Hüllrohr-Wandung (1a) durch spanende Bearbeitung im Bereich der Soll-Positionen mit einer sich in Richtung der Hüllrohr-Längsachse erstreckenden Längsstruktur (3) versehen wird, die um den Umfang der Hüllrohr-Wandung (1a) verteilte Längsschlitze aufweist und dass die Antiresonanzelement-Vorformlinge (5) an jeweils einem Längsschlitz angeordnet sind

## Claims

1. A method for producing an anti-resonant hollow-core fiber which comprises a hollow core extending along a longitudinal axis of the fiber and a casing region that surrounds the hollow core and comprises a plurality of anti-resonant elements, comprising the method steps of:
(a) providing a sheath tube (1) which comprises a sheath tube inner bore (16) and a sheath tube longitudinal axis, along which a sheath tube wall (1a) extends which is delimited by an inner face and an outer face,
(b) providing a number of anti-resonant element preforms (5),
(c) arranging the anti-resonant element preforms (5) at desired positions on the inner face of the sheath tube wall (1a) to form a primary preform (17) for the hollow-core fiber, which primary preform comprises a hollow core region and a casing region, and
(d) further processing the primary preform (17) to form a secondary preform (18) from which the hollow-core fiber is drawn, the further processing comprising carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** the provision of the sheath tube (1) according to method step (a) comprises a machining measure in which the sheath tube wall (1a) is provided, by machining in the region of the target positions, with a longitudinal structure (3) which extends in the direction of the sheath tube longitudinal axis and has longitudinal slots distributed around the circumference of the sheath tube wall (1a) and **in that** the anti-resonant element preforms (5) are each arranged on a longitudinal slot.

2. The method according to claim 1, **characterized in that** the longitudinal structure (3) of the sheath tube inner wall (1a) is created by drilling, sawing, milling, cutting or grinding.

3. The method according to claim 1 or 2, **characterized in that** a sheath tube (1) having a circular inner cross section is provided.

4. The method according to one of the preceding claims, **characterized in that** the sheath tube (1) has front ends (12), and **in that** the longitudinal structure (3) ends before the front ends.

5. The method according to one of the preceding claims, **characterized in that** the anti-resonant element preforms (5) each touch the longitudinal structure (3) on two edges (3a; 3b) when arranged at the desired position according to method step (c).

6. The method according to claim 1, **characterized in that** the longitudinal slots comprise parallel longitudinal edges (3a; 3b) and a maximum slot width SB and the anti-resonant element preforms () are connected to the longitudinal edges (3a; 3b).

7. The method according to claim 6, **characterized in that** the anti-resonant element preforms (5) are connected to the longitudinal edges (3a; 3b) by softening, preferably accompanied by simultaneous lengthening.

8. The method according to one of the preceding claims, **characterized in that** the anti-resonant element preforms (5) each comprise at least one anti-resonant element (5a; 5b) and at least one capillary (9) connected to the anti-resonant element (5a; 5b), the capillary (9) being received in a cavity of the longitudinal structure (3), and the capillary (9) being deformed by applying an internal pressure in the capillary inner bore when carrying out a process according to method step (d).

9. The method according to one of the preceding claims, **characterized in that** the anti-resonant elements (5) are arranged around the hollow core with an uneven symmetry.

10. A method for producing a preform for an anti-resonant hollow-core fiber which comprises a hollow core extending along a longitudinal axis of the fiber and a casing region that surrounds the hollow core and comprises a plurality of anti-resonant elements, comprising the method steps of:
(a) providing a sheath tube (1) which comprises a sheath tube inner bore and a sheath tube longitudinal axis, along which a sheath tube wall (1a) extends which is delimited by an inner face and an outer face,
(b) providing a number of anti-resonant element preforms (5),
(c) arranging the anti-resonant element preforms (5) at desired positions on the inner face of the sheath tube wall (1a) to form a primary preform (17) for the hollow-core fiber, which primary preform comprises a hollow core region and a casing region, and
(d) optionally further processing the primary preform (17) to form a secondary preform (18) for the hollow-core fiber, the further processing comprising carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** the provision of the sheath tube (1) according to method step (a) comprises a machining measure in which the sheath tube wall (1a) is provided, by machining in the region of the target positions, with a longitudinal structure (3) which extends in the direction of the sheath tube longitudinal axis and has longitudinal slots distributed around the circumference of the sheath tube wall (1a) and **in that** the anti-resonant element preforms (5) are each arranged on a longitudinal slot.

## Revendications

1. Procédé pour la fabrication d'une fibre à cœur creux antirésonante qui présente un cœur creux s'étendant le long d'un axe longitudinal de fibre et une zone enveloppante entourant le cœur creux, laquelle comprend plusieurs éléments antirésonance, comportant les étapes de procédé consistant à :
(a) fournir un tuyau de gaine (1) qui présente un trou interne de tuyau de gaine (16) et un axe longitudinal de tuyau de gaine le long duquel s'étend une paroi de tuyau de gaine (1a) délimitée par une face interne et une face externe,
(b) fournir un certain nombre de préformes d'éléments antirésonance (5),
(c) disposer les préformes d'éléments antirésonance (5) dans des positions de consigne de la face interne de la paroi de tuyau de gaine (1a) avec formation d'une préforme primaire (17) pour la fibre à cœur creux, laquelle préforme présente une zone de cœur creux et une zone enveloppante, et
(d) traiter ultérieurement la préforme primaire (17) en une préforme secondaire (18) à partir de laquelle la fibre à cœur creux est étirée, dans lequel le traitement ultérieur comprend une réalisation unique ou répétée d'un ou de plusieurs des processus de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que** la fourniture du tuyau de gaine (1) selon l'étape de procédé (a) comprend une mesure d'usinage dans laquelle la paroi de tuyau de gaine (1a) est pourvue, par usinage par enlèvement de matière dans la zone des positions de consigne, d'une structure longitudinale (3) s'étendant dans la direction de l'axe longitudinal de tuyau de gaine, laquelle structure longitudinale présente des fentes longitudinales réparties autour de la circonférence de la paroi de tuyau de gaine (1a), **et en ce que** les préformes d'éléments antirésonance (5) sont disposées sur respectivement une fente longitudinale.

2. Procédé selon la revendication 1, **caractérisé en ce que** la structure longitudinale (3) de la paroi interne de tuyau de gaine (1a) est produite par perçage, sciage, fraisage, découpage ou meulage.

3. Procédé selon la revendication 1 ou 2, **caractérisé en ce qu'un** tuyau de gaine (1) est fourni avec une section transversale interne circulaire.

4. Procédé selon l'une des revendications précédentes, **caractérisé en ce que** le tuyau de gaine (1) présente des extrémités frontales (12), **et en ce que** la structure longitudinale (3) se termine avant les extrémités frontales.

5. Procédé selon l'une des revendications précédentes, **caractérisé en ce que** les préformes d'éléments antirésonance (5), lorsqu'elles sont disposées dans la position de consigne selon l'étape de procédé (c), touchent la structure longitudinale (3) respectivement sur deux bords (3a ; 3b).

6. Procédé selon la revendication 1, **caractérisé en ce que** les fentes longitudinales présentent des bords longitudinaux (3a ; 3b) parallèles et une largeur de fente maximale S_{B} et les préformes d'éléments antirésonance () sont reliées aux bords longitudinaux (3a ; 3b).

7. Procédé selon la revendication 6, **caractérisé en ce que** les préformes d'éléments antirésonance (5) sont reliées aux bords longitudinaux (3a ; 3b) par ramollissement, de préférence accompagné d'un allongement simultané.

8. Procédé selon l'une des revendications précédentes, **caractérisé en ce que** les préformes d'éléments antirésonance (5) présentent respectivement au moins un élément antirésonance (5a ; 5b) et au moins un tube capillaire (9) relié à l'élément antirésonance (5a ; 5b), dans lequel le tube capillaire (9) est reçu dans un évidement de la structure longitudinale (3) et, lors de la réalisation d'un processus selon l'étape de procédé (d), le tube capillaire (9) est déformé en appliquant une pression interne dans le trou interne de tube capillaire.

9. Procédé selon l'une des revendications précédentes, **caractérisé en ce que** les éléments antirésonance (5) sont disposés autour du cœur creux avec une symétrie impaire.

10. Procédé pour la fabrication d'une préforme pour une fibre à cœur creux antirésonante qui présente un cœur creux s'étendant le long d'un axe longitudinal de fibre et une zone enveloppante entourant le cœur creux, laquelle zone enveloppante comprend plusieurs éléments antirésonance, comportant les étapes de procédé consistant à :
(a) fournir un tuyau de gaine (1) qui présente un trou interne de tuyau de gaine et un axe longitudinal de tuyau de gaine le long duquel s'étend une paroi de tuyau de gaine (1a) délimitée par une face interne et une face externe,
(b) fournir un certain nombre de préformes d'éléments antirésonance (5),
(c) disposer les préformes d'éléments antirésonance (5) dans des positions de consigne de la face interne de la paroi de tuyau de gaine (1a) avec formation d'une préforme primaire (17) pour la fibre à cœur creux, laquelle préforme présente une zone de cœur creux et une zone enveloppante, et
(d) éventuellement, traiter ultérieurement la préforme primaire (17) en une préforme secondaire (18) pour la fibre à cœur creux, dans lequel le traitement ultérieur comprend une réalisation unique ou répétée d'un ou de plusieurs des processus de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que** la fourniture du tuyau de gaine (1) selon l'étape de procédé (a) comprend une mesure d'usinage dans laquelle la paroi de tuyau de gaine (1a) est pourvue, par usinage par enlèvement de matière dans la zone des positions de consigne, d'une structure longitudinale (3) s'étendant dans la direction de l'axe longitudinal de tuyau de gaine, laquelle structure longitudinale présente des fentes longitudinales réparties autour de la circonférence de la paroi de tuyau de gaine (1a), et **en ce que** les préformes d'éléments antirésonance (5) sont disposées sur respectivement une fente longitudinale.
